Europäisches Patentamt

(19) **European Patent Office**

**Office européen des brevets**

(11) Numéro de publication: **0 239 136**
**B1**

(12) **FASCICULE DE BREVET EUROPEEN**

(45) Date de publication du fascicule du brevet:
06.06.90

(51) Int. Cl.⁵: **B29C 45/56**

(21) Numéro de dépôt: **87200225.8**

(22) Date de dépôt: **12.02.87**

(54) Dispositif pour mouler par injection des préformes tubulaires en matière thermoplastique.

(30) Priorité: **24.02.86 FR 8602619**

(43) Date de publication de la demande:
**30.09.87 Bulletin 87/40**

(45) Mention de la délivrance du brevet:
**06.06.90 Bulletin 90/23**

(84) Etats contractants désignés:
**AT BE CH DE ES GB IT LI NL SE**

(56) Documents cités:
**FR-A- 740 565**
**FR-A- 1 043 163**
**FR-A- 2 255 161**
**US-A- 2 801 444**
**US-A- 2 999 273**
**US-A- 3 778 211**

(73) Titulaire: **SOLVAY & Cie (Société Anonyme), Rue du Prince Albert, 33, B-1050 Bruxelles(BE)**

(72) Inventeur: **Depreter, Michel, Avenue Prince Albert, 63, B-1410 Waterloo(BE)**

(74) Mandataire: **Bouchoms, Maurice et al, Solvay & Cie Département de la propriété industrielle 310, rue de Ransbeek, B-1120 Bruxelles(BE)**

ACTORUM AG

## Description

La présente invention concerne un dispositif pour mouler par injection des préformes tubulaires en matière thermoplastique de faible épaisseur et de grande longueur qui convient particulièrement pour la production, par moulage par soufflage, de flacons, et plus particulièrement de flacons biorientés moléculairement, de capacité supérieure à un litre.

La technique de production de flacons en certaines matières thermoplastiques éventuellement biorientés par moulage par injection d'une préforme et moulage par soufflage subséquent de cette préforme est actuellement limitée en ce qui concerne la capacité des flacons réalisables.

On sait, en effet, que du fait de la limitation du taux d'étirabilité de certaines matières thermoplastiques, notamment à leurs températures d'orientation moléculaire, et de la limitation du diamètre des préformes injectées lié au diamètre de leur goulot, il s'avère nécessaire, pour produire des flacons de grande capacité, de réaliser des préformes ayant une longueur supérieure à 150 mm et une épaisseur de paroi assez réduite de l'ordre de 1 à 2 mm.

Ainsi, par exemple, pour réaliser un flacon classique en polychlorure de vinyle biorienté d'une capacité de 1,5 l pesant 40 g et ayant un goulot dont le diamètre interne est de 24 mm, il convient de réaliser au préalable une préforme injectée ayant une longueur de 200 mm et une épaisseur de paroi de 1,7 mm.

Ces deux paramètres, épaisseur faible et grande longueur, constituent des obstacles sérieux pour une injection correcte de préformes dans une installation industrielle qui implique:
– l'injection en un seul point
– une haute précision d'injection
– une nécessité d'éviter tout risque de dégradation thermique du matériau constitutif
– une grande régularité d'épaisseur.

Or, le fait de devoir injecter des préformes de grande longueur sous une faible épaisseur entraîne notamment un risque d'injection incomplète ou d'injection de préformes d'épaisseur irrégulière suite à un décentrage et/ou à un flambage du noyau interne du moule d'injection.

Dans les documents FR-A 2 255 161 et US-A 3 778 211, on a déjà proposé des dispositifs d'injection de préformes dans lesquels le moule d'injection comporte un fourreau coulissant qui remplit initialement la cavité de moulage et dont le mouvement de recul, pendant le processus d'injection permet un allongement progressif de la cavité de moulage. Dans ces dispositifs, il est certes possible en principe de réaliser des préformes de grande longueur ayant une épaisseur régulière. Toutefois dans ces dispositifs, la matière thermoplastique doit progresser le long de la cavité de moulage tandis qu'elle est refroidie ce qui implique un risque de figeage de cette matière et partant un risque de remplissage incomplet de la cavité de moulage.

La présente invention a, dès lors, pour objet de fournir un dispositif qui permet d'éliminer les problèmes sus-mentionnés et qui conduit à la production industrielle de préformes en matière thermoplastique de grande longueur et de faible épaisseur de grande qualité qui conviennent parfaitement pour la production de flacons et, en particulier, de flacons biorientés.

Le dispositif pour mouler par injection des préformes tubulaires en matière thermoplastique de faible épaisseur et de grande longueur conforme à l'invention dans lequel on effectue l'injection de la matière thermoplastique dans un moule d'injection de préformes dont le volume de la cavité d'injection initialement réduit axialement est agrandi progressivement dans la direction de l'axe longitudinal de la préforme au fur et à mesure de son remplissage par la matière thermoplastique injectée et, ce jusqu'à l'obtention d'une cavité de moulage finale de volume et de forme correspondant à celle de la préforme à réaliser, et qui comporte une presse d'injection (1) équipée d'une buse d'injection (2) et au moins un moule d'injection constitué de deux demi-matrices complémentaires externes (3)(4) et d'un noyau interne coaxial (5) définissant une cavité d'injection se caractérise en ce que les deux demi-matrices externes (3)(4) et le noyau interne (5) sont déplaçables les unes par rapport à l'autre dans la direction de leur axe longitudinal commun durant le cycle d'injection.

Dans le dispositif conforme à l'invention, il apparaît que la matière thermoplastique injectée ne doit effectuer qu'un parcours très limité dans la cavité d'injection ce qui réduit tout risque de figeage de cette matière et partant d'un remplissage incomplet de la cavité d'injection. En outre, la cavité d'injection n'atteint sa longueur maximale qu'à la fin du cycle d'injection ce qui réduit tout risque de décentrage ou de flambage du noyau du moule d'injection, ce noyau étant par ailleurs soutenu et maintenu par la matière thermoplastique en voie de solidification injectée au début du cycle d'injection. Par ailleurs, dans le dispositif selon l'invention, il n'est pas nécessaire d'amener la matière thermoplastique injectée à une température maximum compatible avec sa stabilité en vue de la rendre la plus fluide possible et, dès lors, tout risque de dégradation thermique est affaibli en particulier lors de la mise en œuvre de matières thermoplastiques thermosensibles telles que le polychlorure de vinyle. Enfin, dans le dispositif selon l'invention la pression d'injection peut être considérablement diminuée ce qui réduit encore le risque d'un décentrage du noyau d'injection.

Selon un mode d'exploitation du dispositif qui est préféré, l'agrandissement progressif de volume de la cavité d'injection est contrôlée en fonction de la vitesse d'injection de la matière thermoplastique injectée de façon à maintenir constamment sous pression la matière thermoplastique injectée. Ce moyen contribue également à réduire à néant tout risque de remplissage incomplet de la cavité d'injection.

Dans un mode d'exploitation du dispositif qui peut se révéler avantageux, ont peut lubrifier une partie ou la totalité des parois internes du moule d'injection pour favoriser l'écoulement de la matière thermoplastique injectée et pour réduire tout frottement entre la préforme injectée et les éléments constituant le moule d'injection durant le cycle d'injection.

Le déplacement relatif des éléments constitutifs du moule d'injection peut être obtenu par tout moyen adéquat et notamment au moyen de commandes hydrauliques, pneumatiques ou mécaniques. Ces moyens sont, de préférence, contrôlés en fonction de la vitesse d'injection de la presse d'injection.

Dans le dispositif selon l'invention, les deux demi-matrices externes et le noyau interne du moule d'injection sont, au début d'un cycle d'injection, disposés de façon telle que ces éléments délimitent entre eux une cavité d'injection de volume réduit par rapport au volume de la préforme à monter, le rapport entre ces volumes pouvant varier entre 1:1,5 et 1:100 et, de préférence entre 1:2 et 1:50.

Durant le cycle d'injection d'une préforme, ces mêmes éléments sont déplacés les uns par rapport à l'autre de façon à agrandir axialement progressivement le volume de la cavité d'injection et d'amener celle-ci au volume et à la forme de la préforme à mouler.

Ainsi qu'il a été dit, les moyens assurant ce déplacement relatif des éléments constitutifs du moule d'injection sont, de préférence, asservis à la vitesse d'injection du matériau constitutif de la préforme. En général, on préfère que cet asservissement soit tel que la pression d'injection soit maintenue constante durant le cycle d'injection.

L'agrandissement progressif de volume de la cavité d'injection dans le sens axial peut, au choix, être obtenu en maintenant fixe le noyau interne et en déplaçant axialement et simultanément les deux demi-matrices externes, en maintenant fixes les deux demi-matrices externes et en déplaçant axialement le noyau central ou encore en déplaçant axialement le noyau interne et les deux demi-matrices externes axialement dans des sens inverses.

Ainsi qu'il est de pratique usuelle, le noyau interne et les deux demi-matrices externes sont équipés d'éléments de réfrigération et le noyau interne peut être équipé d'une soupape de mise à l'air qui est exploitée lors du démoulage de la préforme, ce démoulage pouvant être obtenu notamment au moyen d'un éjecteur mécanique associé au noyau interne et actionné après l'ouverture du moule d'injection à la fin du cycle d'injection.

Selon un mode de réalisation du dispositif selon l'invention qui se révèle intéressant lorsqu'on utilise un seul moule d'injection, l'extrémité de la buse d'injection peut avantageusement être profilée de façon à constituer le fond externe du moule d'injection en collaboration avec les deux demi-matrices externes.

Selon un autre mode de réalisation du dispositif selon l'invention qui se révèle intéressant lorsqu'on utilise une presse d'injection équipée d'une pluralité de moules d'injection, les moules d'injection peuvent comporter une pièce de fond externe qui est déplaçable par rapport aux demi-matrices externes.

Enfin, dans le dispositif conforme à l'invention, on préfère en général que les demi-matrices externes délimitent avec le noyau interne une cavité d'injection initiale permettant le moulage définitif du col de la préforme à réaliser. A cette fin, les empreintes des demi-matrices externes peuvent comporter les gravures nécessaires pour mouler le col de la préforme à réaliser dès le début du cycle d'injection.

Le dispositif conforme à l'invention et son fonctionnement sont, en outre, explicités plus en détail dans les descriptions qui vont suivre, de deux modes de réalisation préférentiels donnés à titre illustratif. La première concerne un dispositif comportant un seul moule d'injection et la seconde un dispositif pouvant être équipé d'une pluralité de moules d'injection montés, par exemple, sur un système à barillet.

Dans ces descriptions, on se référera aux figures des dessins annexés dans lesquelles :

les figures 1 à 3 montrent, en coupe, le premier dispositif dans différents stades de son fonctionnement lors d'un cycle de moulage par injection d'une préforme tubulaire

les figures 4 à 9 montrent, en coupe, le second dispositif dans différents stades également de son fonctionnement lors d'un cycle de moulage par injection d'une préforme tubulaire.

Premier dispositif

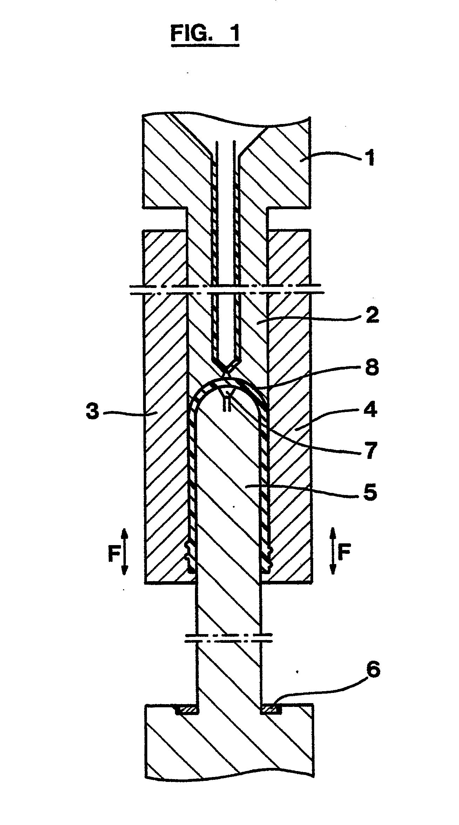

Ainsi qu'il apparaît aux figures 1 à 3, le dispositif conforme à l'invention comporte une presse d'injection 1, partiellement représentée, équipée dune buse d'injection 2 et un moule d'injection comportant principalement deux demi-matrices externes 3, 4 et un noyau interne coaxial 5 équipé d'un éjecteur 6 et d'une soupape 7 de mise à l'air partiellement représentée. La buse d'injection 2 a son extrémité 8 profilée en demi-sphère de façon à constituer le fond externe du moule d'injection en collaboration avec les deux demi-matrices externes 3, 4. Enfin, conformément à l'invention, les deux demi-matrices externes 3, 4 peuvent être déplacées axialement selon la direction des flèches F par des moyens non représentés.

Au début du cycle d'injection d'une préforme 9, ainsi qu'il est représenté à la figure 1, les deux demi-matrices externes 3, 4 sont en position haute de façon à délimiter avec le noyau interne 5 une cavité d'injection intiale dont le volume est nettement inférieur à celui de la préforme 9 à produire.

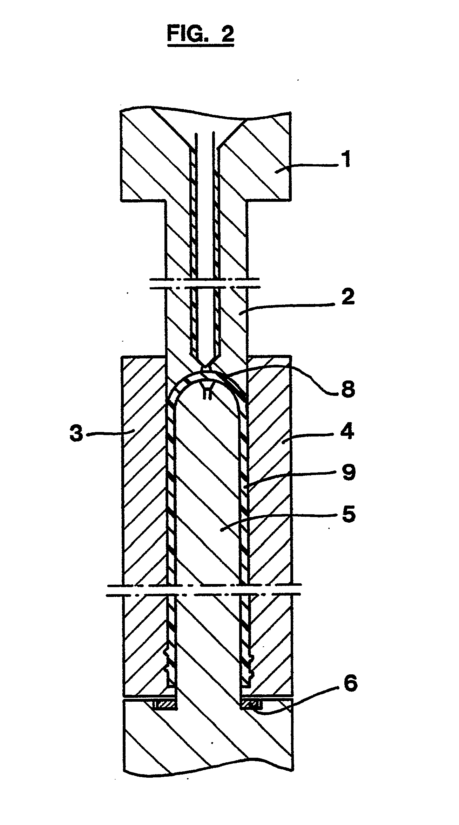

Au cours de l'injection, les deux demi-matrices externes 3, 4 sont déplacées vers le bas de façon à accroître progressivement le volume de la cavité d'injection dans le sens axial. Le déplacement progressif et simultané des deux demi-matrices externes est effectué à une vitesse telle que compte tenu de la vitesse d'injection de la presse, la matière thermoplastique injectée dans la cavité d'injection soit maintenue sous une pression constante. A la fin de l'injection, les deux demi-matrices occupent la position représentée à la figure 2 et délimitent avec l'extrémité 8 de la buse d'injection 2 et avec le noyau interne 5 une cavité correspondant exactement à la préforme tubulaire désirée.

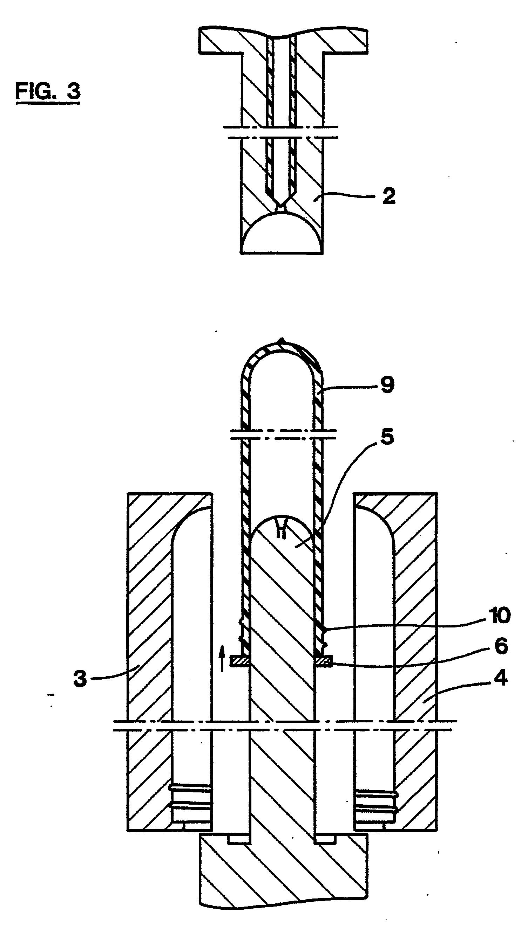

Dès que la préforme tubulaire 9 ainsi moulée par injection est suffisamment refroidie, les deux demi-matrices externes 3, 4 sont déplacées latéralement (figure 3) et la préforme 9 moulée et écartée de l'extrémité de la buse d'injection 2 peut être extraite du noyau interne 5 au moyen de l'éjecteur 6.

Il convient encore de noter que les empreintes des deux demi-matrices externes 3, 4 sont gravées de façon à permettre l'obtention d'une préforme moulée 9 équipée d'un col 10 moulé de façon définitive.

Avec le dispositif ainsi décrit, il est possible de produire des préformes tubulaires de grande longueur et d'épaisseur de paroi très régulière qui conviennent parfaitement pour le moulage de corps creux par soufflage et particulièrement pour le moulage de corps creux biorientés moléculairement par conditionnement thermique préalable des préformes.

Second dispositif

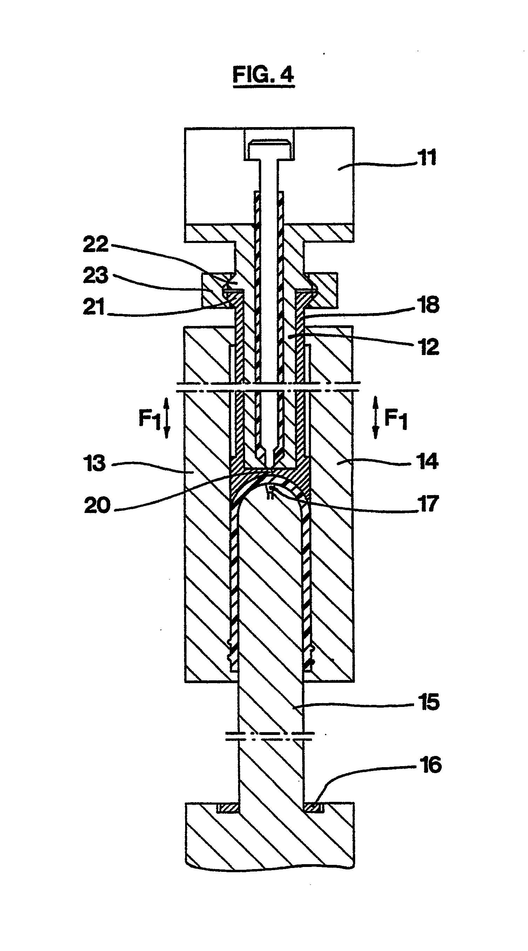

Ainsi qu'il apparaît aux figures 4 à 9, le dispositif conforme à l'invention comporte également une presse d'injection 11 partiellement représentée équipée d'une buse d'injection 12 et une pluralité de moules d'injection, dont un seul est représenté, comportant principalement deux demi-matrices externes 13, 14 et un noyau ç interne coaxial 15 équipé d'un éjecteur 16 et d'une soupape 17 de mise à l'air partiellement représentée. Chaque moule d'injection comporte en outre une pièce externe de fond 18 de forme tubulaire et qui s'adapte coaxialement autour de la buse d'injection 12. La pièce externe de fond est profilée dans sa partie terminale selon la forme à conférer à la préforme 19 à mouler et cette partie terminale comporte un canal central d'injection 20 coaxial avec la buse d'injection 12. L'autre extrémité de la pièce externe de fond 18 est équipée d'un rebord annulaire externe 21 qui peut être solidarisé avec un rebord annulaire 22 prévu sur la buse d'injection 12 par l'intermédiaire de mâchoires amovibles 23. Les mâchoires 23 permettent donc de solidariser la pièce externe de fond 18 avec la buse d'injection 12 lorsque cette pièce de fond 18 est enfilée à fond sur la buse d'injection 12. Conformément à l'invention, les deux demi-matrices externes 13, 14 peuvent être déplacées axialement selon la direction des flèches $F_1$ et le long de la pièce externe de fond 18 et du noyau central 15 par des moyens non représentés.

Au début d'un cycle d'injection d'une préforme 19 ainsi qu'il est représenté à la figure 4, le moule d'injection en travail se trouve en position haute. Dans cette position, la pièce externe de fond 18 est enfilée à fond sur la buse d'injection 12 et solidarisée avec celle-ci par l'intermédiaire de mâchoires amovibles 23. En outre, les demi-matrices externes 13, 14 occupent également une position haute et définissent avec la pièce externe de fond 18 et avec le noyau interne 15 une cavité d'injection de volume réduit axialement par rapport au volume de la préforme 19 à réaliser.

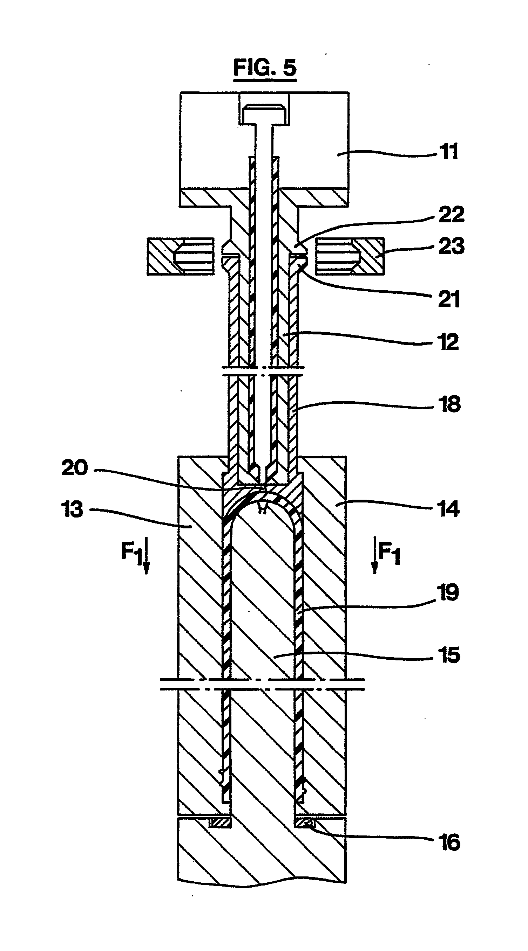

Durant l'injection de la matière thermoplastique, les deux demi-matrices externes 13, 14 sont déplacées axialement progressivement vers le bas (figure 5) de façon à agrandir axialement la cavité d'injection et à amener celle-ci au volume et à la forme de la préforme 19 à produire.

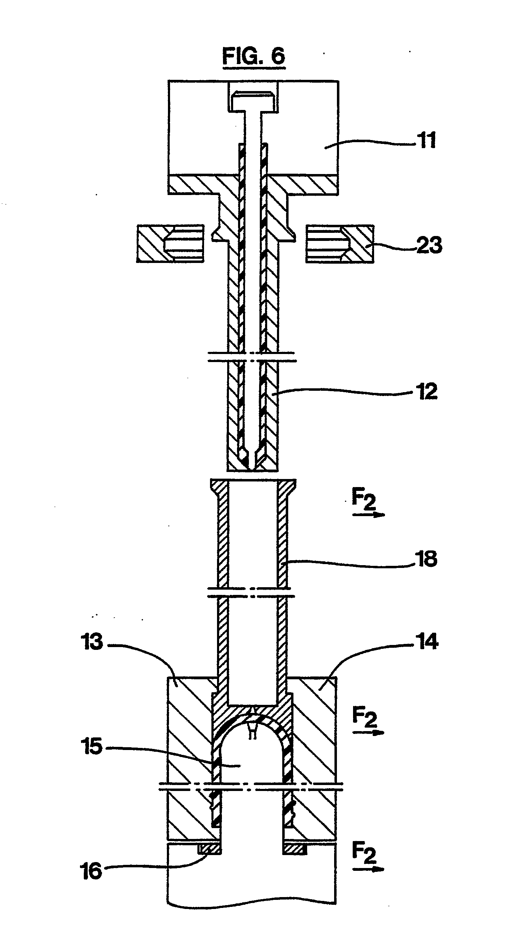

A la fin du cycle d'injection, les mâchoires amovibles 23 libèrent la pièce externe de fond 18 et l'ensemble du moule d'injection, constitué par des demi-matrices externes 13, 14 se déplace vers le bas et se dégage de la buse d'injection (figure 6).

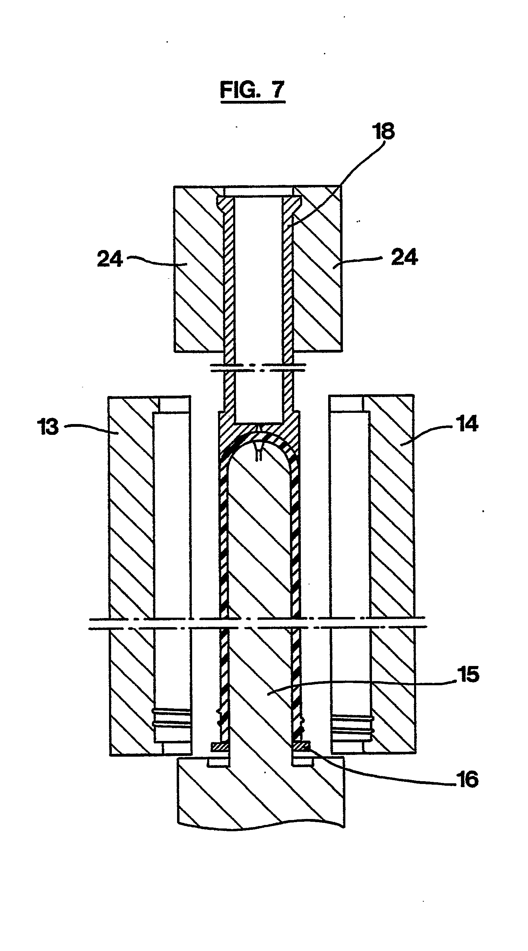

Lorsque la pièce externe de fond 18 est complètement dégagée de la buse d'injection (figure 6), le moule d'injection est déplacé latéralement (flèches $F_2$) vers un poste d'éjection (figure 7) en passant éventuellement par plusieurs postes successifs intermédiaires de refroidissement et un ature moule d'injection peut être amené directement en position de travail à la verticale de la buse d'injection 12.

Lorsque le moule atteint le poste d'éjection (figure 7), des mâchoires mobiles 24 saisissent la partie de la pièce externe de fond 18 qui émerge du moule d'injection et assurent le maintien de cette pièce tandis que les demi-matrices externes sont écartées latéralement l'une de l'autre de façon à libérer la préforme moulée 19 qui reste maintenue sur le noyau interne 15.

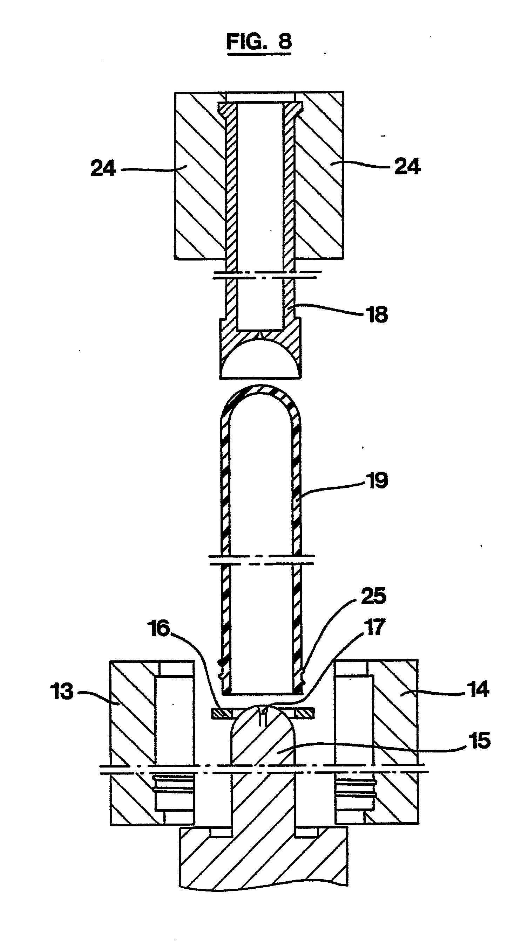

Après cet écartement, les mâchoires mobiles 24 sont déplacées vers le haut et l'éjecteur 16 peut extraire la préforme du noyau interne 15 (figure 8), la soupape de mise à l'air 17 étant ouverte.

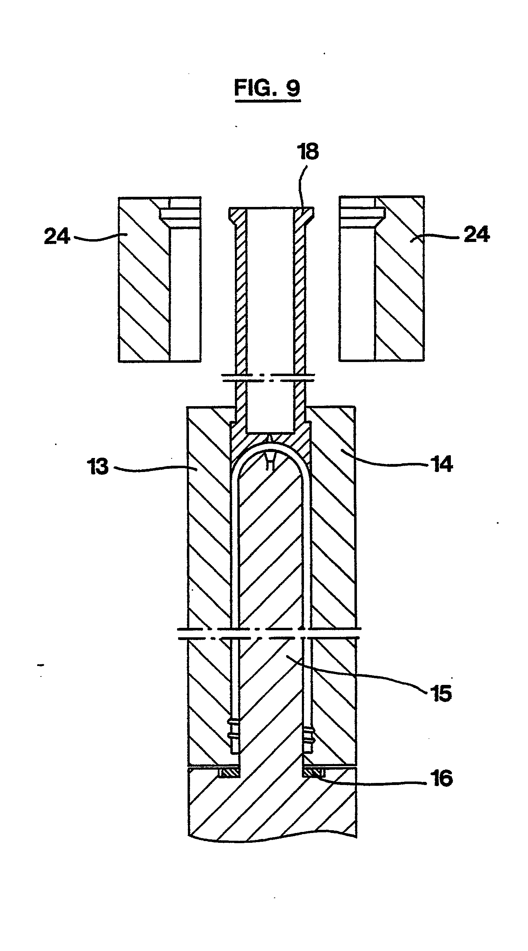

Après éjection de la préforme, les mâchoires mobiles 24 sont ramenées à leur position initiale par un déplacement vers le bas et les demi-matrices externes 13, 14 sont rapprochées pour reconstituer le moule d'injection autour de la pièce externe de fond 18 qui peut alors être libérée par les mâchoires mobiles 24 (figure 9).

Le moule d'injection est alors amené à nouveau à la verticale de la buse d'injection 12 de façon à pouvoir exécuter un nouveau cycle de moulage.

A cet effet, le moule d'injection est déplacé axialement vers le haut jusqu'à remise en position de la pièce externe de fond 18 sur la buse d'injection 12 et maintien de celle-ci par les mâchoires 23 et jusqu'à remise en position de départ de demi-matrices externes 13, 14 (figure 4).

Il convient encore de noter que les empreintes des deux demi-matrices externes 13, 14 sont également gravées de façon à permettre l'obtention d'une préforme moulée 19 équipée d'un col 25 moulé de façon définitive.

Le dispositif tel que décrit rend possible l'utilisation d'une pluralité de moules d'injection mis en service successivement et permet avec une bonne productivité la réalisation de préformes tubulaires d'épaisseur de paroi régulière et de grande longueur qui conviennent parfaitement pour la production de corps creux par soufflage et, en particulier, de corps creux biorientés moléculairement.

**Revendications**

1 - Dispositif pour mouler par injection des préformes tubulaires en matière thermoplastique de faible épaisseur et de grande longueur dans lequel on effectue l'injection de la matière thermoplastique dans un moule d'injection de préformes dont le volume de la cavité d'injection initialement réduit axialement est agrandi progressivement dans la direction de l'axe longitudinal de la préforme au fur et à mesure de son remplissage par la matière thermoplastique injectée jusqu'à obtention d'une cavité d'injection finale de volume et de forme correspondant à ceux de la préforme à réaliser, ledit dispositif comportant une presse d'injection (1) équipée d'une buse d'injection (2) et au moins un moule d'injection constitué de deux demi-matrices complémentaires externes (3), (4) et d'un noyau interne coaxial (5) définissant une cavité d'injection caractérisé en ce que les deux demi-matrices externes (3), (4) et le noyau interne (5) sont déplaçables les unes par rapport à l'autre dans la direction de leur axe longitudinal commun durant le cycle d'injection.

2 - Dispositif selon la revendication 1, caractérisé en ce que le déplacement relatif des éléments constitutifs du moule d'injection est assuré par une commande contrôlée en fonction de la vitesse d'injection de la presse d'injection (1).

3 - Dispositif selon la revendication 1 ou 2, caractérisé en ce que l'extrémité (8) de la buse d'injection (2) est profilée de façon à constituer le fond externe du moule d'injection en collaboration avec les deux demi-matrices externes (3), (4).

4 - Dispositif selon la revendication 1 ou 2 caractérisé en ce que les moules d'injection comportent une pièce de fond externe qui est déplaçable par rapport aux demi-matrices externes (3), (4).

5 - Dispositif selon l'une quelconque des revendications 1 à 4, caractérisé en ce que les demi-matrices externes (3), (4) délimitent avec le noyau interne (5) une cavité d'injection permettant le moulage d'une préforme tubulaire (9) équipée d'un col moulé (10).

**Patentansprüche**

1. Vorrichtung zum Spritzgießen von rohrförmigen Vorförmlingen aus thermoplastischem Material mit geringer Dicke und großer Länge, bei der das Spritzen des thermoplastischen Materials in eine Spritzform für Vorförmlinge durchgeführt wird, deren Spritzhohlraumvolumen, das anfangs axial reduziert ist, progressiv in Richtung der Längsachse der Vorform entsprechend ihrer Füllung durch das eingespritzte thermoplastische Material vergrößert ist, bis zum Erhalt eines in Volumen und Form endgültigen Spritzhohlraums, die denen des herzustellenden Vorförmlings entsprechen, wobei diese Vorrichtung eine Spritzgußmaschine (1), die mit einer Spritzdüse (2) ausgestattet ist und wenigstens eine Spritzform, die aus zwei äußeren komplementären Halbmatrizen (3), (4) und aus einem inneren koaxialen Kern (5), der einen Spritzhohlraum definiert, umfaßt, dadurch gekennzeichnet, daß die beiden äußeren Halbmatrizen (3), (4) und der innere Kern (5) gegeneinander in Richtung ihrer gemeinsamen Längsachse während des Spritzkreislaufs verschiebbar sind.

2. Vorrichtung nach Anspruch 1, dadurch gekennzeichnet, daß die Verschiebung bezüglich der die Spritzform bildenden Elemente durch eine Steuerung gesichert ist, die in Abhängigkeit der Spritzgeschwindigkeit der Spritzgußmaschine (1) gesteuert wird.

3. Vorrichtung nach Anspruch 1 oder 2, dadurch gekennzeichnet, daß das Ende (8) der Spritzdüse (2) profiliert ist, derart, daß der äußere Boden der Spritzform gemeinsam mit den beiden äußeren Halbmatrizen (3), (4) gebildet wird.

4. Vorrichtung nach Anspruch 1 oder 2, dadurch gekennzeichnet, daß die Spritzformen ein äußeres Bodenteil umfassen, das bezüglich der äußeren Halbmatrizen (3), (4) verschiebbar ist.

5. Vorrichtung nach einem der Ansprüche 1 bis 4, dadurch gekennzeichnet, daß die äußeren Halbmatrizen (3), (4) mit dem inneren Kern (5) einen Spritzhohlraum abgrenzen, der das Gießen eines rohrförmigen Vorförmlings (9), der mit einem gegossenen Hals (10) ausgestattet ist, erlaubt.

**Claims**

1. Device for injection-moulding thermoplastic tubular preforms of low thickness and of great length in which the thermoplastic is injected into a mould for injection-moulding preforms whose capacity of the injection-moulding cavity, initially reduced axially, is progressively enlarged in the direction of the lengthwise axis of the preform as it is being filled by the injected thermoplastic until a final injection-moulding cavity of a capacity and shape corresponding to those of the prefom to be produced is obtained, the said device comprising an injection-moulding press (1) equipped with an injection nozzle (2) and at least one injection mould consisting of two outer complementary half-mould cavities (3), (4) and of a coaxial inner core (5) defining an injection-moulding cavity, characterized in that the two outer half-mould cavities (3), (4) and the inner core (5) are movable, the former ones relative to the other one, in the direction of their common lengthwise axis during the injection-moulding cycle.

2. Device according to claim 1, characterized in that the relative movement of the constituent parts of the injection mould is secured by a drive controlled as a function of the rate of injection of the injection-moulding press (1).

3. Device according to claim 1 or 2, characterized in that the end (8) of the injection nozzle (2) is profiled so as to form the outer bottom of the injection mould in co-operation with the two outer half-mould cavities (3), (4).

4. Device according to claim 1 or 2, characterized in that the injection moulds comprise an outer bottom part which is movable relative to the outer half-mould cavities (3), (4).

5. Device according to any one of claims 1 to 4, characterized in that the outer half-mould cavities (3), (4) define with the inner core (5) an injection-moulding cavity permitting the moulding of a tubular preform (9) equipped with a moulded neck (10).

# FIG. 1

## FIG. 2

FIG. 3

## FIG. 4

## FIG. 5

FIG. 6

EP 0 239 136 B1

## FIG. 7

## FIG. 8

## FIG. 9